# DEMANDE DE BREVET EUROPEEN

(11) **EP 0 546 955 A1**
(43) Date de publication de la demande: **16.06.1993**
(21) Numéro de dépôt: 92403385.5
(22) Date de dépôt: 11.12.1992
(51) Int. Cl.: F27B 7/28, F27D 1/14, B01J 6/00

(54) **Four tubulaire tournant à haute température**

(30) Priorité: 13.12.1991 FR 9115543
(71) Demandeur: MAGUIN, F-02800 Charmes (FR)
(72) Inventeur: Decottignies, Charles, F-02800 Charmes (FR)
(74) Mandataire: Casalonga, Axel

(57) **Abrégé**

Four tubulaire tournant à haute température, comprenant une partie médiane tubulaire (1) montée mobile en rotation autour de son axe longitudinal entre deux parties d'extrémité (2,3) fixes, caractérisé par le fait que la partie médiane tubulaire (1) comprend un tube extérieur (9) métallique de support, un tube intérieur (10) métallique réfractaire, une isolation thermique (11, 12, 13) entre lesdits tubes, et des moyens de soutien (14) entre le tube extérieur et le tube intérieur pour permettre au tube extérieur de soutenir le tube intérieur tout en autorisant une dilatation différentielle des deux tubes dans le sens radial et dans le sens longitudinal.

## Description

La présente invention se rapporte à un four tubulaire tournant à haute température comprenant une partie médiane cylindrique montée mobile en rotation autour de son axe entre deux parties d'extrémité fixes.

Sur les fours tubulaires connus de ce type, la partie médiane est constituée d'un tube métallique extérieur garni intérieurement d'un briquetage réfractaire ou d'un revêtement en béton réfractaire.

Les fours de ce type peuvent fonctionner à des températures intérieures pouvant atteindre 1500°C, mais la montée et la descente de la température de ces fours est très lente (entre 24 et 48 heures), ce qui correspond à une grande perte d'énergie calorifique et fait que ces fours sont généralement prévus pour une marche en continu.

Le briquetage ou revêtement réfractaire est par ailleurs très lourd et afin d'éviter sa dégradation par contrainte thermique et déformation du tube métallique, il est nécessaire d'entraîner le four en rotation autour de son axe dès la montée en température.

De plus, dans ce type de fours, le produit à traiter peut coller au briquetage ou revêtement réfractaire et le nettoyage de l'intérieur du four est alors difficile à réaliser. Selon la nature des produits à traiter, ces derniers peuvent également réagir chimiquement avec le matériau réfractaire, entrînant une dégradation de ce matériau ou une pollution du produit traité pour ce matériau.

Enfin, si le briquetage ou revêtement réfractaire se détériore, il est nécessaire de le remplacer, opération qui est particulièrement longue, délicate et coûteuse.

La présente invention vise un four tubulaire tournant à haute température évitant ou réduisant les inconvénients des fours à briquetage ou revêtement intérieur réfractaire, en permettant une plus grande souplesse d'utilisation, un nettoyage plus aisé et un entretien réduit. L'invention vise également un four tubulaire tournant de structure plus légère et d'une mise en oeuvre plus simple que les fours usuels.

Sur le four tubulaire tournant à haute température conforme à l'invention, comprenant une partie médiane tubulaire montée mobile en rotation autour de son axe longitudinal entre deux parties d'extrémité fixes, la partie médiane tubulaire comprend un tube extérieur métallique de support, un tube intérieur métallique réfractaire, une isolation thermique entre lesdits deux tubes, et des moyens de soutien entre le tube extérieur et le tube intérieur pour permettre au tube extérieur de soutenir le tube intérieur tout en autorisant une dilatation différentielle des deux tubes dans le sens radial et dans le sens longitudinal.

Dans le four tubulaire conforme en l'invention, seul le tube intérieur est porté à haute température et est constitué par un acier ou alliage réfractaire assurant à l'ensemble de la partie tubulaire tournante du four ses propriétés de résistance thermique et chimique. Le tube extérieur qui n'adopte pendant la marche du four que des températures modestes peut être en acier ordinaire et assure à la partie médiane tubulaire du four sa tenue mécanique et son entraînement.

L'isolation thermique entre les deux tubes n'a pas à supporter d'effort mécanique et peut être constituée de fibres, c'est-à-dire d'un matériau léger ayant de bonnes propriétés d'isolation thermique.

Les moyens de soutien du tube intérieur par le tube extérieur comprennent avantageusement des premiers moyens intervenant pendant la montée et la descente en température pour assurer la concentricité et le positionnement axial des deux tubes l'un par rapport à l'autre tout en permettant la dilatation du tube intérieur par rapport au tube extérieur dans le sens radial et dans le sens longitudinal, et des seconds moyens intervenant lorsque le tube intérieur à atteint la température de marche pour soutenir alors le tube intérieur rigidement par le tube extérieur.

De préférence, les premiers moyens de soutien sont conçus de manière à établir un point fixe dans le sens longitudinal entre les deux tubes, et à permettre par ailleurs la libre dilatation longitudinale du tube intérieur par rapport au tube extérieur.

Ce point fixe peut se trouver à une extrémité de la partie médiane tubulaire, de sorte que le tube intérieur puisse se dilater librement dans le sens longitudinal à l'autre extrémité. Cependant, notamment dans le cas de fours tubulaires de grande longueur, il est préférable de choisir la position du point fixe de manière à obtenir sensiblement la même dilatation longitudinale sur les deux côtés du point fixe, ce qui implique l'utilisation de trois premiers moyens de soutien dont l'un se trouve audit point fixe et les deux autres au voisinage des deux extrémités de la partie tubulaire médiane.

Les seconds moyens de soutien peuvent comprendre des plots réfractaires disposés sur le tube extérieur en étant régulièrement répartis sur le pourtour de ce tube dans plusieurs plans perpendiculaires à l'axe du tube, ces plots étant dirigés radialement vers le tube intérieur et ayant une longueur radiale telle que leur extrémité extérieure n'entre en contact avec le tube intérieur que lorsque ce dernier se trouve à la température de marche.

Lesdits plots peuvent être disposés entre le tube extérieur et le tube intérieur.

Cependant, suivant un mode de réalisation préféré permettant le remplacement aisé des plots réfractaires en cas de détérioration, chaque plot traverse le tube extérieur et est sollicité par des ressorts contre une embase fixée de façon démontable au tube extérieur, à l'extérieur de ce dernier.

En se référant aux dessins schématiques annexés, on va décrire ci-après plus en détails un mode de réalisation illustratif et non limitatif d'un four tubulaire tournant conforme à l'invention ; sur les dessins :
la figure 1 est une vue latérale extérieure schématique, partiellement en coupe, d'un four conforme à l'invention;
les figures 2 et 3 sont des coupes suivant II-II et III-III de la figure 1;
la figure 4 est une coupe à plus grande échelle d'un mode de réalisation d'un plot de soutien et de ses moyens de fixation, suivant IV-IV de la figure 5;
la figure 5 est une coupe suivant V-V de la figure 4;
les figures 6 et 7 sont des coupes des moyens de soutien prévus aux deux extrémités longitudinales pour supporter le tube intérieur par le tube extérieur avant que ce dernier ait atteint la température de marche.

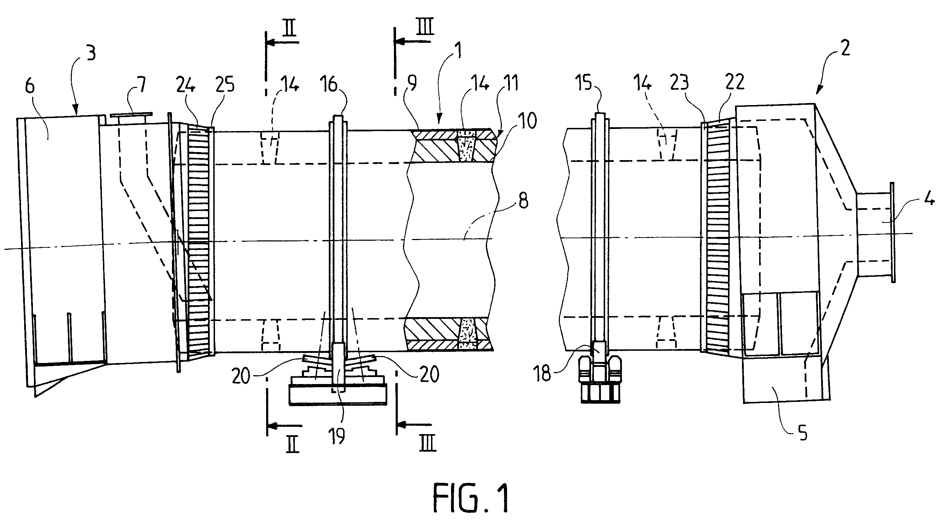

Le four tubulaire tel qu'illustré par les figures 1 à 3 comprend, comme les fours tubulaires classiques, une partie médiane tubulaire cylindrique 1 disposée entre deux parties d'extrémité fixes 2 et 3, à savoir une partie 2 comportant une entrée d'air chaud 4 et une sortie 5 du produit traité, et une partie 3 comportant une sortie d'air 6 et une entrée 7 du produit à traiter.

La partie médiane 1 qui peut être légèrement inclinée, comme représenté sur la figure 1, est montée et actionnée en rotation autour de son axe longitudinal 8 par des moyens qui seront décrits par la suite.

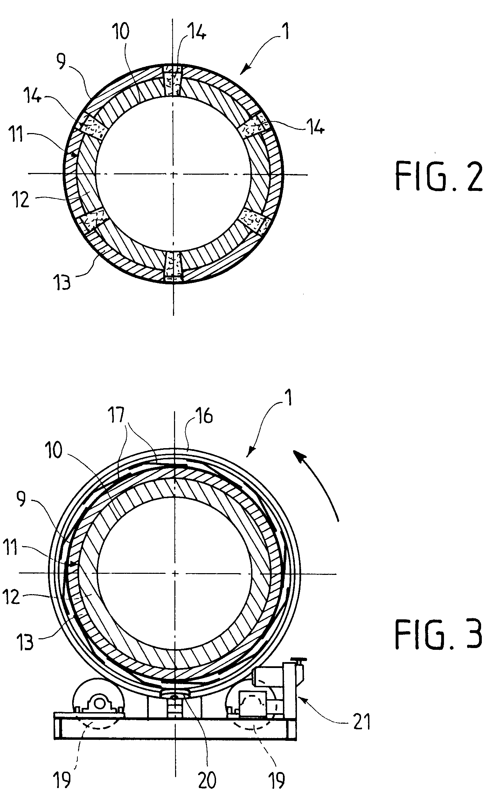

Selon les figures 2 et 3, la partie médiane tubulaire 1 se compose essentiellement d'un tube extérieur 9, d'un tube intérieur 10 et d'une couche d'isolation thermique 11 entre les deux tubes.

Le tube extérieur 9 est un tube épais en acier ordinaire, tandis que le tube intérieur 10 est un tube plus mince en acier ou alliage réfractaire. L'isolation thermique 11 entre les deux tubes 9 et 10 est ici constituée d'une couche intérieure 12 en fibres réfractaires, par exemple en laine céramique, et d'une couche extérieure 13, par exemple en laine de roche.

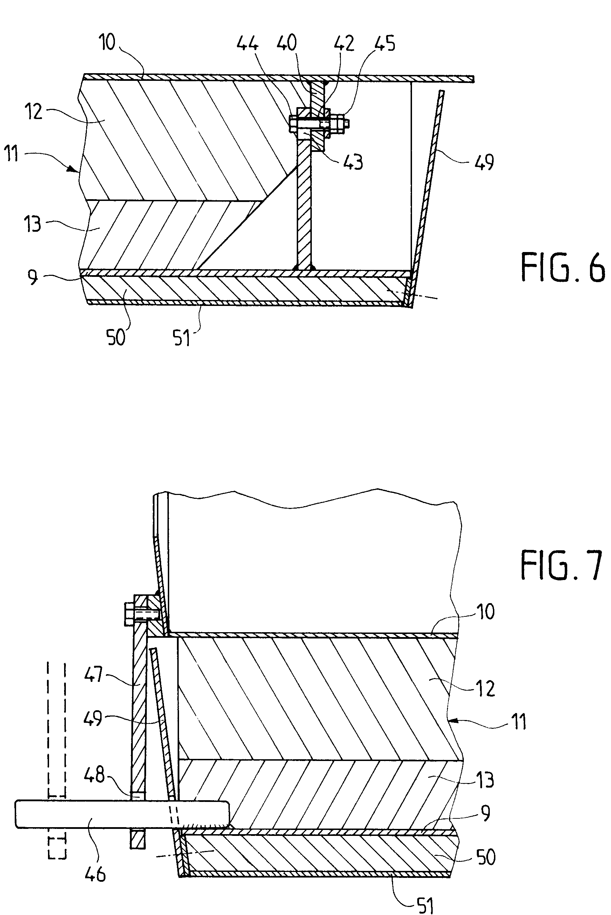

La position relative du tube intérieur 10 par rapport au tube extérieur 9 est maintenue aux deux extrémités de ces tubes par des moyens de soutien qui seront décrits plus en détail par la suite en référence aux figures 6 et 7. Il est à noter que ces moyens de support n'interviennent que pendant les phases de montée et de descente en température du tube intérieur 10.

Plusieurs séries circonférentielles de plots 14 par exemple en béton réfractaire disposés entre le tube extérieur 9 et le tube intérieur 10, en étant répartis uniformément sur le pourtour, sont par ailleurs prévues sur la longueur des tubes 9 et 10, dans plusieurs plans perpendiculaires à l'axe de ces tubes. Les plots 14 fixés au tube extérieur 9 ont une longueur radiale telle que le tube intérieur 10 ne vient en contact avec les plots 14 que lorsqu'il a atteint la température de marche. Par conséquent, les plots 14 ne s'opposent pas à la dilatation radiale, ni à la dilatation longitudinale que le tube intérieur subit lors de sa montée en température, par rapport au tube extérieur 9 qui assure à l'ensemble de la partie tubulaire médiane 1 sa tenue mécanique et son entraînement.

Lorque le tube intérieur 10 est en contact avec les plots 14, ces derniers travaillent en compression et assurent un frettage du tube 10, ce qui renforce la structure de ce dernier.

Deux chemins de roulement 15 et 16 sont fixés extérieurement au tube extérieur 9, chacun par une série de lames tangentes 17 visibles sur la figure 3, permettant la libre dilatation différentielle entre les chemins de roulement 15, 16 et le tube extérieur 9. Par les chemins de roulement 15 et 16, le tube 9 prend appui sur des jeux de galets de roulement 18, 19. Au chemin de roulement 16 sont par ailleurs associés deux galets de retenue 20 assurant le positionnement longitudinal du tube 9. De plus, comme le montre la figure 3, l'un des galets de roulement 19 associés aux chemin de roulement 16 est entraîné par un moto-réducteur 21, en vue de l'entraînement de la partie tubulaire médiane 1 en rotation autour de son axe 8.

L'étanchéité entre la partie fixe 2 et la partie tournante 1 est assurée par une série de tôles 22 portées par la partie fixe 2 et frottant sur une bague 23 fixée sur le tube extérieur 9 de la partie tubulaire 1. De façon correspondante, l'étanchéité entre la partie fixe 3 et la partie tournante 1 est assurée par une série de tôles 24 frottant sur une bague 25 du tube extérieur 9.

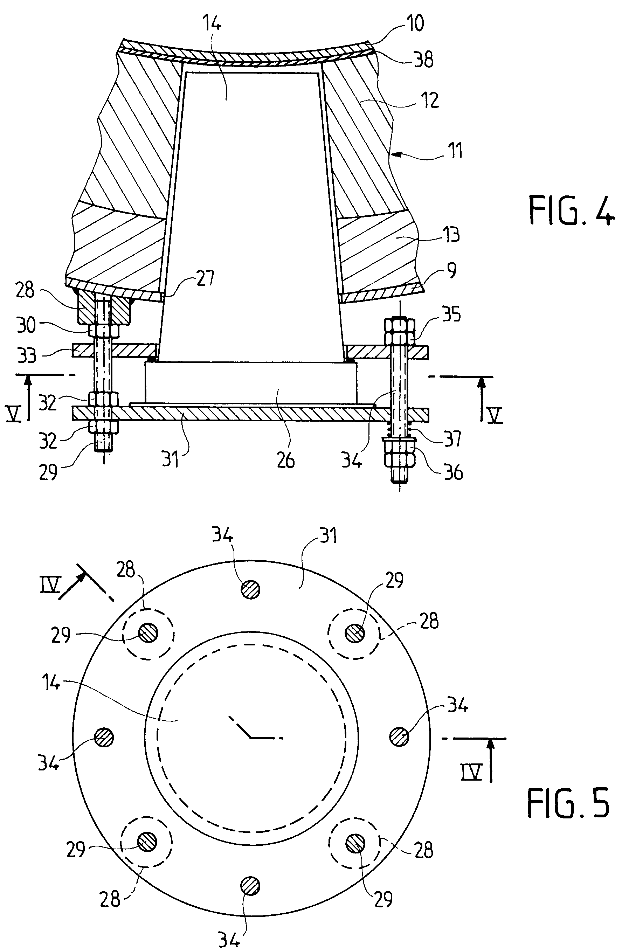

Les figures 4 et 5 illustrent un mode de réalisation et de fixation des plots de soutien 14. Chaque plot 14 présente ici une forme sensiblement tronconique, avec un renflement 26 à sa grande base, à l'extérieur du tube extérieur 9.

Autour d'un trou 27 ménagé dans le tube extérieur 9 pour le passage du plot 14, plusieurs manchons taraudés 28 sont fixés par soudage sur un même cercle extérieurement au tube 9. Les manchons 28 reçoivent chacun une tige filetée 29 bloquée dans le manchon 28 à l'aide d'un écrou 30. Une embase 31 est immobilisée à l'aide de deux écrous 32 sur les tiges 29, embase contre laquelle la base du plot 14 est serrée à l'aide d'un anneau 33 prenant appui sur le renflement 26 du plot 14, la liaison de l'anneau 33 avec l'embase 31 étant assurée à l'aide de quatre autres tiges filetées 34 traversant l'anneau 33 et l'embase 31, d'écrous 35 et 36, et de ressorts 37.

On reconnaît clairement sur la figure 4 qui montre le tube intérieur 10 avant sa montée en température, c'est-à-dire avant sa dilatation, que le tube 10 ne porte pas contre le plot 14. Ce n'est qu'après sa montée en température, donc sa dilatation, que le tube intérieur 10 vient prendre appui contre les plots 14, lesquels reprennent alors les efforts de soutien du tube intérieur 10. On reconnaît par ailleurs sur la figure 4 qu'une bague de renfort 38 est prévue autour du tube intérieur 10, dans le plan de chaque série de plots de support 14, afin de prévenir une déformation éventuelle du tube intérieur 10 au contact des plots 14.

Tant que le tube intérieur 10 n'a pas atteint sa température de fonctionnement, c'est-à-dire tant que les plots 14 ne supposent pas le tube intérieur 10, le tube intérieur 10 est maintenu en position par rapport au tube extérieur 9, aux deux extrémités des tubes, par des moyens illustrés par les figures 6 et 7. Il est à noter que ces moyens doivent permettre la dilatation radiale ainsi que la dilatation longitudinale du tube intérieur 10 par rapport au tube extérieur 9.

Selon la figure 6, ces moyens comprennent, à l'extrémité tournée vers la partie fixe 2, c'est-à-dire à l'extrémité de déchargement du produit traité, une série de tôles 40 fixées à la surface extérieure du tube intérieur 10, sur la périphérie de ce dernier, et une série de tôles 41 fixées sur la périphérie intérieure du tube extérieur 9, chaque tôle 40 comportant un trou circulaire 40 et chaque tôle 41 un trou 43 oblong radialement pour le passage d'un boulon 44 dont les écrous 45 sont bloqués de manière à permettre un déplacement radial du tube 10 par rapport au tube 9 en réponse à la dilatation ou la contraction du tube 10 lors de sa montée ou descente en température. Par contre, ce système ne permet pas de déplacement longitudinal du tube intérieur 10 par rapport au tube extérieur 9 et établit donc un point fixe dans le sens longitudinal.
A l'autre extrémité de la partie médiane tubulaire 1, le tube intérieur 10 est relié au tube extérieur 9 par un système permettant une libre dilatation du tube intérieur 10 par rapport au tube extérieur 9, dans le sens radial et dans le sens longitudinal. Plusieurs tiges axiales 46 sont ici fixées en porte-à-faux au tube extérieur 9, sur le pourtour intérieur de ce dernier, et plusieurs tôles 46 sont fixées au tube intérieur 10 de manière à faire saillie radialement vers l'extérieur à l'endroit des tiges 46. Chaque tôle 47 présente, à l'endroit d'une tige 46, un trou 48 oblong dans le sens radial, ce qui permet à chaque tôle 47 engagée par son trou 48 sur une tige 46 de se déplacer par rapport à la tige 46 à la fois radialement et longitudinalement en réponse aux dilatations ou contractions du tube 10 sous l'effet de la montée ou de la descente en température.
Sur la figure 7, on a représenté en trait plein la position d'une tôle 47 par rapport à la tige 46 lorsque le tube intérieur 10 est froid, et en tirets la position de la même tôle 47 lorsque le tube 10 se trouve à la température de fonctionnement du four.

On reconnaît par ailleurs sur les figures 6 et 7 des tôles 49 fixées au tube extérieur 9, aux deux extrémités de ce dernier, de manière à s'étendre de façon oblique en direction du tube intérieur 10. Ces tôles 49 constituent un système d'étanchéité empêchant les gaz chauds pouvant être corrosifs de détruire l'isolant 12,13 disposé entre les deux tubes 9 et 10.

On reconnaît également sur les figures 6 et 7 que le tube extérieur 9 peut être entouré d'une couche d'isolant 50, par exemple une couche de laine de roche, et d'une enveloppe 51, par exemple en aluminium, de façon à assurer une protection thermique respectant les normes de sécurité. De cette manière, pour une température intérieure du four de l'ordre de 1050°C, la température du tube extérieur 9 est de l'ordre de 70° et la température de l'enveloppe extérieure 51 est inférieure à 50°C.

Les avantages du four conforme à l'invention tel que décrit ci-dessus et illustré par les dessins annexés sont multiples. La réalisation de la partie médiane tubulaire tournante 1 est simple car cette partie se compose essentiellement de deux tubes métalliques et d'une isolation thermique facile à mettre en oeuvre. La masse volumique de cette isolation thermique à base de laine céramique et de laine de roche est d'environ 120 kg/m3, ce qui est beaucoup plus léger qu'un revêtement réfractaire de même pouvoir isolant.

La faible inertie thermique de la structure de la partie tubulaire tournante permet de monter en température jusqu'à 1050°C en deux heures environ, ce qui est beaucoup plus court que pour un four à revêtement réfractaire.

La dilatation radiale, c'est-à-dire circonférentielle, et la dilatation longitudinale du tube intérieur en acier réfractaire peuvent être utilisées pour le nettoyage de ce tube. En effet, lorsque le tube intérieur est recouvert de produit collé, les coefficients de dilatation thermique sont généralement très différents pour le produit et l'acier, de sorte que le refroidissement du tube intérieur entraîne un décollement du produit, qu'il suffit ensuite de balayer.

Lorsque le tube intérieur est usé ou corrodé par les produits, il peut être facilement remplacé sans qu'il soit nécessaire de démonter le four en entier.

Le four selon l'invention qui est beaucoup plus léger qu'un four à revêtement réfractaire permet des économies appréciables en temps et en coût de fabrication ainsi qu'en énergie thermique, tant pour la montée en température que pour le maintien en température. La température à l'intérieur du four tubulaire conforme à l'invention n'est limitée que par les performances des aciers ou alliages réfractaires utilisés.

Le four tel que décrit et représenté n'a été donné qu'à titre d'exemple illustratif et non limitatif et de nombreuses modifications et variantes sont possibles dans le cadre de l'invention.
Ainsi, notamment dans le cas de fours de grande longueur, il est préférable de prévoir des moyens de soutien formant point fixe, tels que les tôles 40, 41, et les boulons 44, 45 de la figure 6, assurant le centrage du tube intérieur 10 par le tube extérieur 9 tout en autorisant la dilatation radiale du tube intérieur 10, sans déplacement longitudinal du tube intérieur 10 par rapport au tube extérieur 9, non pas à une extrémité de la partie médiane tubulaire 1, mais en un point situé entre les deux extrémités de manière à obtenir, par rapport à ce point fixe, sensiblement la même dilatation longitudinale aux deux extrémités de la partie médiane tubulaire 1. Dans ce cas, des moyens de soutien tels que les tiges 46 et les tôles 47 de la figure 7, sont prévus aux deux extrémités de la partie médiane tubulaire 1.

Les plots 14 réfractaires, au lieu d'être en béton, pourraient également être, par exemple, en acier réfractaire et être alors fixés rigidement par vis au tube extérieur 9. Ces plots en acier peuvent être creux et être remplis de matériau isolant.

Par ailleurs l'isolant 11, au lieu d'être constitué de deux couches 12, 13 de fibres en nappe, peut être formé d'un isolant monolithique constitué d'un mélange de fibres et de liant projeté par exemple sur la face intérieure du tube extérieur 9. De tels isolants sont connus en soi et peuvent être mis en oeuvre suivant les procédés usuels de ces isolants.

Le four conforme à l'invention peut être utilisé pour des opérations de traitement thermique les plus diverses sur des produits en vrac de natures diverses, le choix du matériau du tube intérieur 10 permettant une adaptation du four à la fois à la température de traitement et au produit à traiter. A titre d'exemple, il est possible d'utiliser le four conforme à l'invention pour la production de billes de verre expansé pouvant servir par exemple à la réalisation d'enduits de façade de béton et de parpaings allégés et isolants, et pour la calcination de fluorure d'aluminium. Il s'agit là d'opérations qu'il est difficile, voire impossible à effectuer dans des fours tubulaires à briquetage ou revêtement réfractaire.

## Revendications

1. Four tubulaire tournant à haute température, comprenant une partie médiane tubulaire (1) montée mobile en rotation autour de son axe longitudinal entre deux parties d'extrémité (2,3) fixes, caractérisé par le fait que la partie médiane tubulaire (1) comprend un tube extérieur (9) métallique de support, un tube intérieur (10) métallique réfractaire, une isolation thermique (11, 12, 13) entre lesdits tubes, et des moyens de soutien (14; 40 à 45; 46 à 48) entre le tube extérieur et le tube intérieur pour permettre au tube extérieur de soutenir le tube intérieur tout en autorisant une dilatation différentielle des deux tubes dans le sens radial et dans le sens longitudinal.

2. Four suivant la revendication 1, caractérisé par le fait que les moyens de soutien du tube intérieur par le tube extérieur comprennent des premiers moyens (40 à 45; 46 à 48) intervenant pendant la montée et la descente en température du four pour assurer la concentricité et le positionnement axial des deux tubes tout en permettant la dilatation du tube intérieur par rapport audit tube extérieur dans le sens radial et dans le sens longitudinal, et des seconds moyens (14) intervenant lorsque le tube intérieur a atteint la température de marche, pour soutenir alors le tube intérieur rigidement par le tube extérieur.

3. Four suivant la revendication 2, caractérisé par le fait que deux premiers moyens de soutien sont prévus aux deux extrémités de la partie tubulaire médiane (1) et sont conçus de manière à établir un point fixe dans le sens longitudinal entre les deux tubes (9, 10) à une extrémité et à permettre la libre dilatation longitudinale du tube intérieur (10) par rapport au tube extérieur (9) à l'autre extrémité de la partie tubulaire médiane.

4. Four suivant la revendication 2, caractérisé par le fait que deux premiers moyens de soutien sont prévus aux deux extrémités et sont conçus de manière à permettre une libre dilatation longitudinale du tube intérieur (10) par rapport au tube extérieur et qu'un premier moyen de soutien établissant un point fixe dans le sens longitudinal entre les deux tubes (9, 10) est prévu entre les deux extrémités, en un point tel que la dilatation longitudinale aux deux extrémités soit sensiblement la même par rapport à ce point fixe.

5. Four suivant la revendication 2, caractérisé par le fait que les seconds moyens de soutien comprennent des plots (14) réfractaires disposés sur le tube extérieur (9) en étant régulièrement répartis sur le pourtour du tube dans plusieurs plans perpendiculaires à l'axe du tube, ces plots étant dirigés radialement vers le tube intérieur et ayant une longueur radiale telle que leur extrémité intérieure n'entre en contact avec le tube intérieur que lorsque ce dernier se trouve à la température de marche.

6. Four suivant la revendication 5, caractérisé par le fait que les plots (14) sont disposés entre le tube extérieur et le tube intérieur.

7. Four suivant la revendication 5, caractérisé par le fait que chaque plot (14) traverse le tube extérieur (9) et est sollicité par des ressorts (37) contre une embase (31) fixée de façon démontable au tube extérieur (9), à l'extérieur de ce dernier.

8. Four suivant l'une quelconque des revendications précédentes, caractérisé par le fait que la partie tubulaire médiane (1) comprend, à ses deux extrémités, des moyens d'étanchéité 49 entre les deux tubes, empêchant les gaz chauds d'agir directement sur l'isolant.

9. Four suivant l'une quelconque des revendications précédentes, caractérisé par le fait que l'isolation thermique (11) entre les deux tubes (9, 10) est constituée par un isolant monolithique formé d'un mélange de fibres et de liant mis en oeuvre par projection de préférence sur la face intérieure du tube extérieur (9).

10. Four suivant l'une quelconque des revendications 1 à 8, caractérisé par le fait que l'isolation thermique (11) entre les tubes (9, 10) est constituée par un isolant en couches multiples (12, 13).
